# EUROPEAN PATENT APPLICATION

(11) **EP 4 650 836 A1**
(43) Date of publication of application: **19.11.2025**
(21) Application number: 25176184.7
(22) Date of filing: 13.05.2025
(51) Int. Cl.: G02B 6/255

(54) **FIBER OPTIC FUSION SPLICE CONNECTOR AND SPLICE HOLDER**

(30) Priority: 16.05.2024 US 202418666308
(71) Applicant: Panduit Corp., Tinley Park, Illinois 60487 (US)
(72) Inventor: Patel, Satish I., Tinley Park (US); Novak, Benjamin S., Tinley Park (US)
(74) Representative: Roberts, Gwilym Vaughan

(57) **Abstract**

A system for connecting a fusion splice connector to an optical fiber has a fiber optic fiber, a fusion splice connector wherein a cable-to-cable splice is fully enclosed within a connector housing, and a connector holder. The connector holder has a connector base with a front support pad configured to provide support to a first portion of the ferrule holder and a rear support rib configured to provide support to the ferrule holder at a point distal from the first portion.

## Description

### FIELD OF DISCLOSURE

The present disclosure relates generally to fiber optic connectors and more specifically to a connector and holder for fusion splicing fiber optic connectors.

### BACKGROUND

To make a connection with a field fiber using a splice-on connector approach, Panduit currently offers mechanical splice-on connectors under Opticam name in LC, SC and ST styles as detailed in US patents 7,011,454 and 8,256,970. The Opticam connectors feature factory polished ferrule with stub fiber disposed in index matching gel inside the connector. For termination, the field fiber is stripped, cleaned, and cleaved to a set length and inserted into the connector to align with the stub fiber through index matching gel. Once the field fiber is aligned, a cam action buffer clamp secures the field fiber into place to prevent any movement. The Opticam mechanical splice-on connectors are easy to terminate and do not require expensive termination tools. However, it uses index matching gel to transfer signal from field fiber to stub fiber. As optical property of the glass and gel is not identical, mechanical splice-on connectors have higher insertion loss.

What is needed is a fusion splice type splice-on connector where glass is fused thermally to offer lowest loss connector. This type of connector was not preferred in the industry due to extremely high cost of the fusion splice equipment, but lately cost of fusion splice equipment has come down to make this type of connector cost effective for field use.

### SUMMARY

A system for connecting a fusion splice connector to an optical fiber has a fiber optic fiber, a fusion splice connector wherein a cable-to-cable splice is fully enclosed within a connector housing, and a connector holder. The connector holder has a connector base with a front support pad configured to provide support to a first portion of the ferrule holder and a rear support rib configured to provide support to the ferrule holder at a point distal from the first portion.

### BRIEF DESCRIPTION OF THE DRAWINGS

Fig.1 shows a trimetric view of fusion splice connector assembly 10.
Fig. 2 is an exploded view of fusion splice connector 20.
Fig. 3 is a trimetric view of dust cap 50 in both LC and SC versions.
Fig. 4 is an exploded trimetric view of ferrule assembly 60.
Fig. 5 is a trimetric view of ferrule assembly 60 showing keying groove 140, sharp corners 142, and chamfered corners 144 of ferrule holder 120.
Fig. 6 is an internal section view of housing 40 showing keying feature 160.
Fig. 7 is a trimetric view showing protective sleeve 70.
Fig. 8 is a trimetric exploded view showing rear assembly 230.
Fig. 9 is a rear trimetric view of housing 40 showing latch windows 42 that engage with latches 92 of backbone 90.
Fig. 10 is a trimetric view showing assembly steps 1 and 2.
Fig. 11 shows assembly step 3.
Fig. 12 shows assembly step 4.
Fig. 13 shows assembly step 5.
Fig. 14 shows assembled connector 10.
Fig. 15 shows trimetric view of connector holder 210 with LC fusion splice connector ferrule assembly 220.
Fig. 16 shows trimetric view of connector holder 210 with SC fusion splice connector ferrule assembly 230.
Fig. 17 is an exploded view of connector holder 210.
Fig. 18 shows connector holder 210 with base 240 and ejector 260 assembled.
Fig. 19 shows connector holder with ejector lever 268 in pressed down position.
Fig. 20 is a top view of connector holder in Fig.19 showing section line 21.
Fig. 21 is a section view passing through section line 21.
Fig.22 shows trimetric view of connector holder 310 with LC fusion splice connector ferrule assembly 320.
Fig. 23 shows trimetric view of connector holder 10 with SC fusion splice connector ferrule assembly 330.
Fig. 24 is a trimetric view of connector holder 310 showing front support pad 340 and rear support rib 342.
Fig. 25 is a trimetric view of LC fusion splice connector ferrule assembly 320.
Fig. 26 is a trimetric view of SC fusion splice connector ferrule assembly 330.
Fig.27 shows trimetric view of alternate fusion splice connector assembly 310.
Fig. 28 is an exploded view of fusion splice connector 320.
Fig. 29 is a trimetric view showing Backbone 390.
Fig. 30 is a rear trimetric view of housing 340 showing latch windows 342 that engage with flexible latches 392 of backbone 390.

### DESCRIPTION OF DISCLOSURE

The present disclosure is a splice-on fusion splice connector having a factory polished ferrule assembly with stub fiber having a 900-micron tight buffer and protective sleeve for fusion splicing to field fiber using fusion splicing machines common to the industry. The protective sleeve fuses to stub fiber 900-micron buffer and field fiber 900-micron buffer to reinforce the fusion splice connection. The disclosure shown here is for an LC style connector, but this disclosure can be implemented in SC or ST style fiber optic connectors.

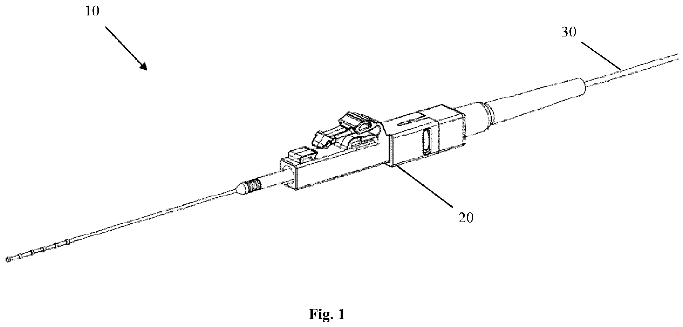

Fig.1 shows trimetric view of fusion splice connector assembly 10. Fusion splice connector 20 is terminated to fiber optic cable 30.

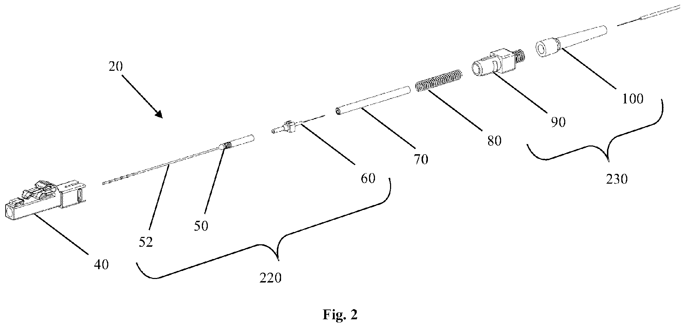

Fig. 2 is an exploded view of fusion splice connector 20. Fusion splice connector 20 includes dust cap 50, housing 40, ferrule assembly 60, protective sleeve 70, spring 80, backbone 90 and boot 100. Dust cap 50 features integral tether 52 to ease handling during assembly. Dust cap 50 is supplied assembled to ferrule assembly 60 to protect ferrule interface. It is identified as front assembly 220 in this view. The backbone 90 and boot 100 are shipped assembled to customer as rear assembly 230 and spring 80 is installed over protective sleeve 70 to reduce number of separate pieces to be assembled in the field.

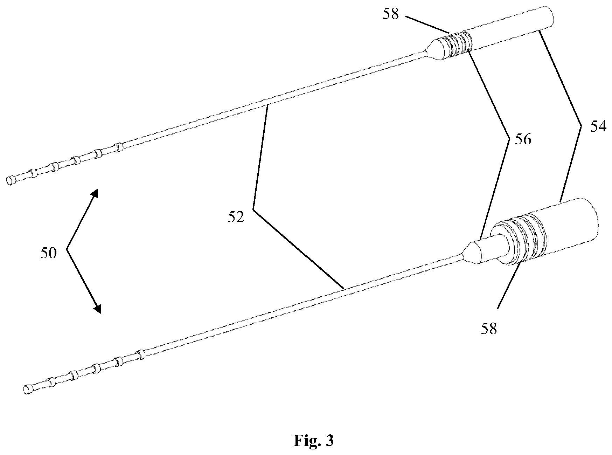

Fig. 3 is a trimetric view of dust cap 50 in both LC and SC versions, showing tether 52, main cap portion 54, and holder securing feature 56. Tether 52 is used to handle the ferrule assembly 60 during the splicing and connector assembly process and can be used to easily remove the dust cap from the connector ferrule during regular use. Main cap portion 54 protects the ferrule end face from damage and contamination. Retaining feature 56 fits into the ferrule assembly holding fixture used during splicing to locate the ferrule assembly so that the stub fiber of the ferrule assembly is in the correct position relative to the splicing machine's electrodes. The diameter of retaining feature 56 is common between the LC and SC dust caps so that both types of ferrule assemblies will be held in the same position when installed in the ferrule assembly holding fixture. Grooves 58 provide a grip surface to aid in removing the dust cap from the ferrule.

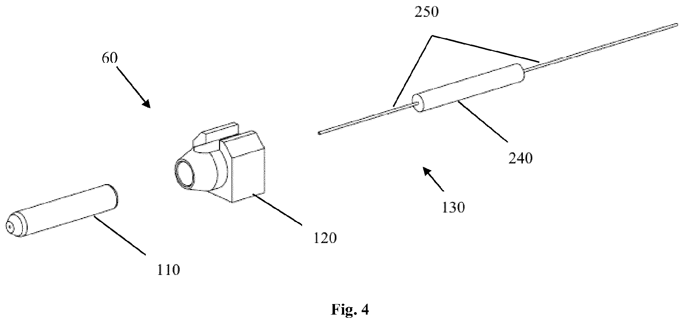

Fig. 4 is an exploded trimetric view of ferrule assembly 60. It includes ferrule 110, ferrule holder 120 and fiber 130. Fiber 130 includes buffer 240 and glass fiber 250.

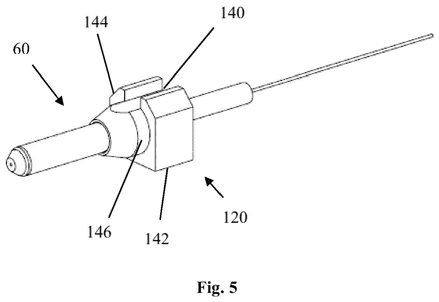

Fig. 5 is a trimetric view of ferrule assembly 60 showing keying groove 140, sharp corners 142, and chamfered corners 144 of ferrule holder 120. The sharp corners 142 and chamfered corners 144 of the ferrule holder give it an asymmetrical profile that matches the profile of the opening in housing 40 so that the radial orientation is controlled at the point of insertion into the housing.

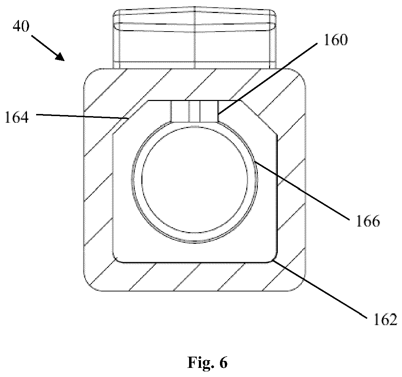

Fig. 6 is an internal section view of housing 40 showing keying feature 160. Keying feature 160 engages with keying groove 140 of ferrule holder 120. The keying feature primarily locates the ferrule assembly radially within the connector housing, which is especially important for APC connectors to control angle orientation. Sharp corners 162 and chamfered corners 164 match the corresponding features on ferrule holder 120 to aid in initial ferrule installation. Cylindrical bore 166 accepts cylindrical face 146 of ferrule holder 120 to center the ferrule assembly in the connector housing once fully installed.

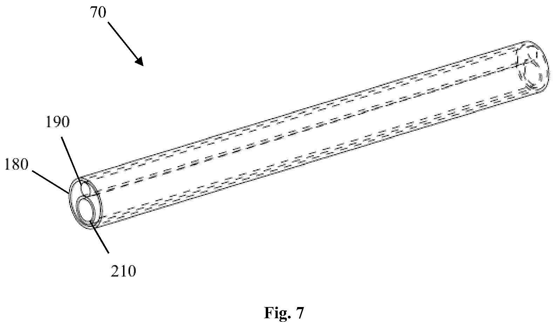

Fig. 7 is a trimetric view showing protective sleeve 70. It includes outer heat shrink tube 180, reinforcing rod 190 and inner heat shrink tube 210.

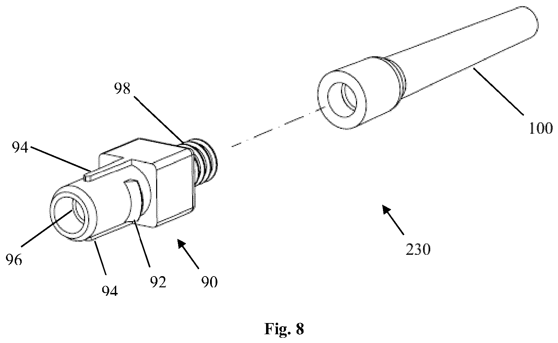

Fig. 8 is a trimetric exploded view showing rear assembly 230. Backbone 90 has latches 92 that engage with latch windows on housing 40 to lock the backbone in place upon assembly. Wedge features 94 act as keying features to aid assembly orientation. Pocket 96 accepts spring 80. Boot 100 is snapped on to backbone rear protrusion 98.

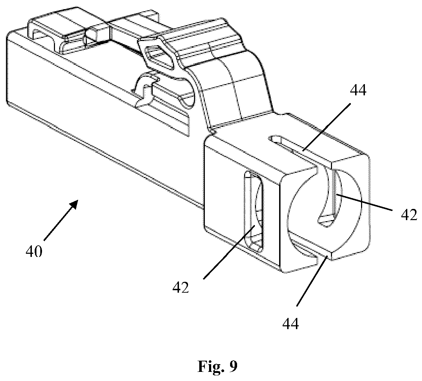

Fig. 9 is a rear trimetric view of housing 40 showing latch windows 42 that engage with latches 92 of backbone 90. Slots 44 mate with wedge features 94 of backbone 90 and also allow the sides of the housing to flex outward during insertion of backbone 90.

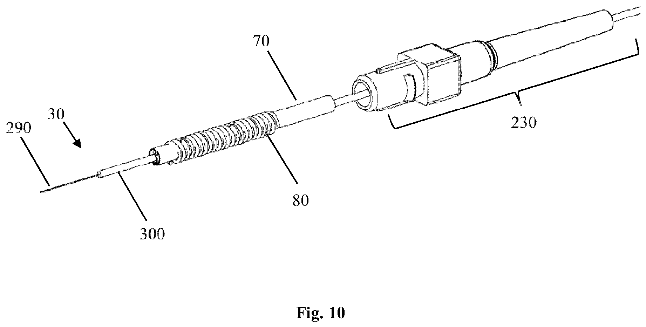

Fig. 10 is a trimetric view showing assembly steps 1 and 2. In step 1 rear assembly 230 and protective sleeve 70 with spring 80 are slid on to fiber optic cable 30. In step 2 cable buffer 300 is stripped and glass fiber 290 is cleaved to a specified length.

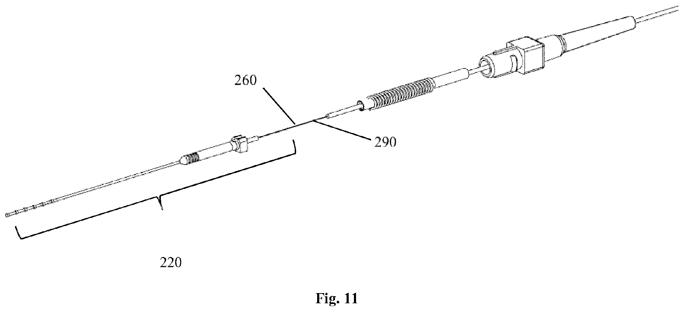

Fig. 11 shows assembly step 3. In this step front assembly 220 is fusion spliced to cleaved glass fiber 290 at fusion splice point 260 using fusion splice equipment.

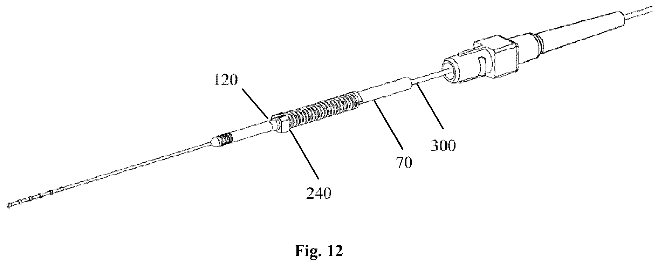

Fig. 12 shows assembly step 4. In this step protective sleeve 70 is positioned over the buffer 240 behind the ferrule holder 120 and cable buffer 300. Protective sleeve 70 is heat shrunk using fusion splice equipment.

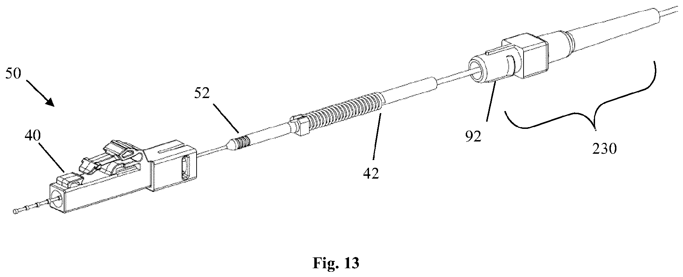

Fig. 13 shows assembly step 5. In this step tether 52 of dust cap 50 is pulled through housing 40 while aligning keying groove 140 with keying feature 160 inside housing 40. In step 6, rear assembly 230 is assembled to housing 40. Backbone latches 92 latch to housing latch windows 42.

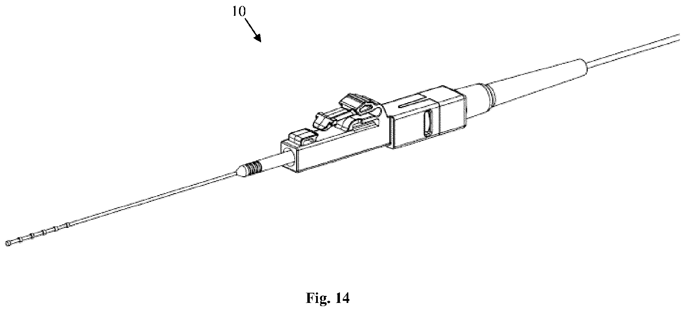

Fig. 14 shows assembled connector 10.

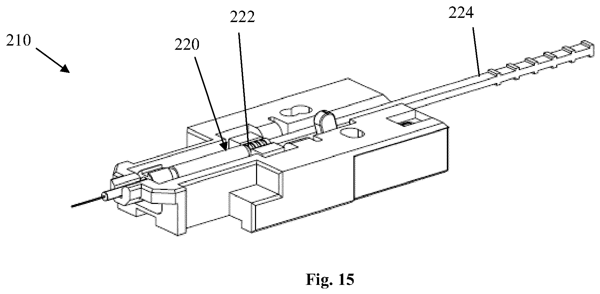

Fig. 15 shows trimetric view of connector holder 210 with LC fusion splice connector ferrule assembly 220. The LC fusion splice connector ferrule assembly 220 features dust cap with retaining feature 222 and tether 224.

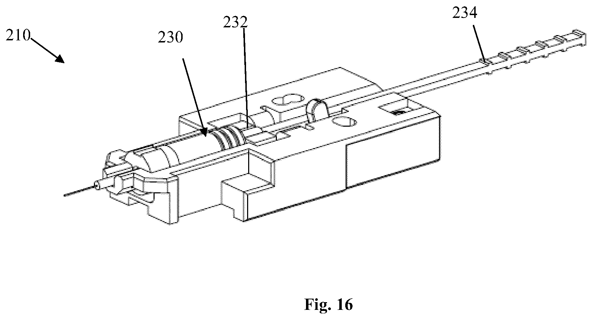

Fig. 16 shows trimetric view of connector holder 210 with SC fusion splice connector ferrule assembly 230. The SC fusion splice connector ferrule assembly 230 features dust cap with retaining feature 232 and tether 234. Both LC and SC dust cap retaining features 222 and 232 are dimensionally same size.

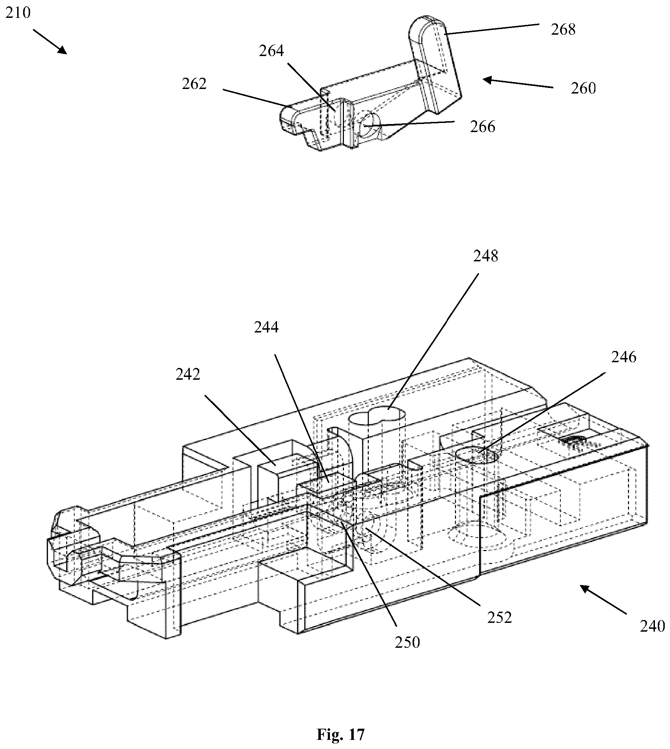

Fig. 17 is an exploded view of connector holder 210. Connector holder 210 includes base 240 and ejector 260. Base 240 includes posts 242 and 244, locating holes 246 and 248, ejector retaining pins 250 and 252. Ejector 260 features holes 264 and 266 that engage with retaining pins 250 and 252, ejector arm 262 and ejector lever 268.

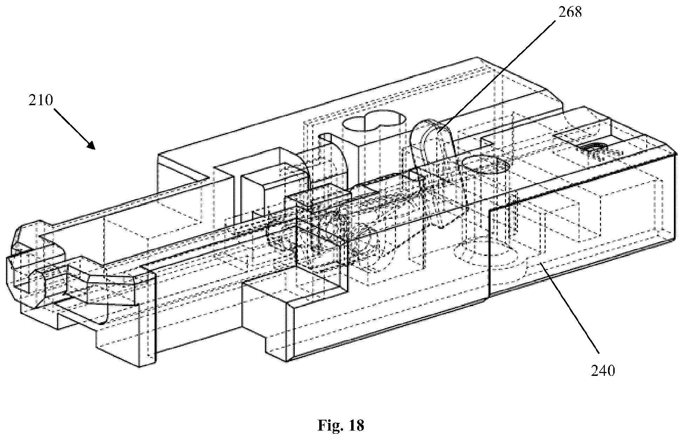

Fig. 18 shows connector holder 210 with base 240 and ejector 260 assembled. For fusion splicing, connector holder 210 is positioned over locating pins of fusion splice machine while aligning fusion splice machine locating pins with locating holes 246 and 248. For LC ferrule assembly 220, retaining feature 222 is pressed between posts 242 and 244 over ejector arm 262. Posts 242 and 244 are designed to flex out and maintain clamping force on retaining feature 222. Once ferrule assembly is fusion spliced to field fiber, ejector lever 268 is pressed down. Ejector 260 pivots around pins 250 and 252. Downward movement of ejector lever 268 results in upward movement of ejector arm 262.

This upward movement of ejector arm 262 pushes retaining feature 222 out from posts 242 and 244. At this point, fusion spliced ferrule assembly can be lifted off from fusion splice machine by holding the field fiber and dust cap tether 224. For SC ferrule assembly, retaining feature 232 is held between posts 242 and 244. The remaining steps are the same as LC ferrule assembly fusion splicing operation.

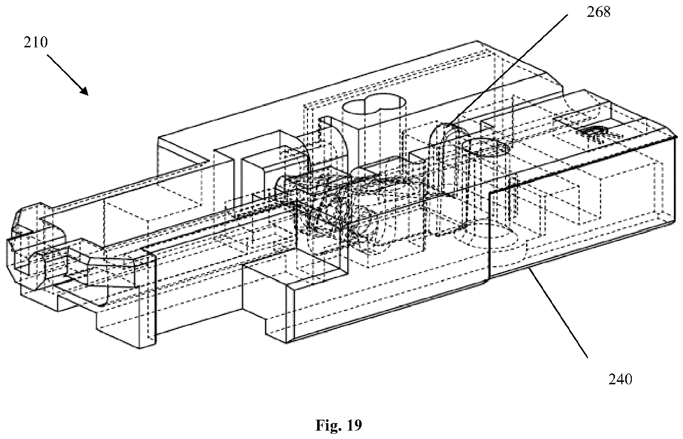

Fig. 19 shows connector holder with ejector lever 268 in pressed down position.

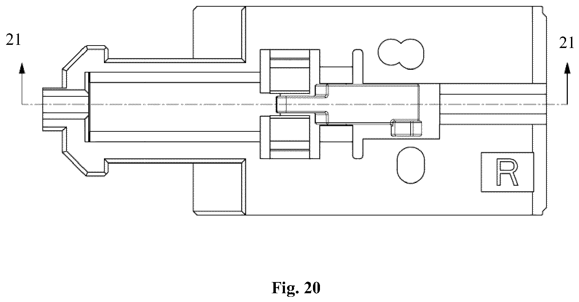

Fig. 20 is a top view of connector holder in Fig.19 showing section line 21.

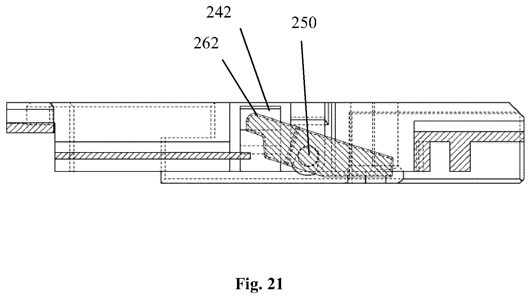

Fig. 21 is a section view passing through section line 21. It shows ejector 260 rotated around pin 252 and ejector arm 262 in up position.

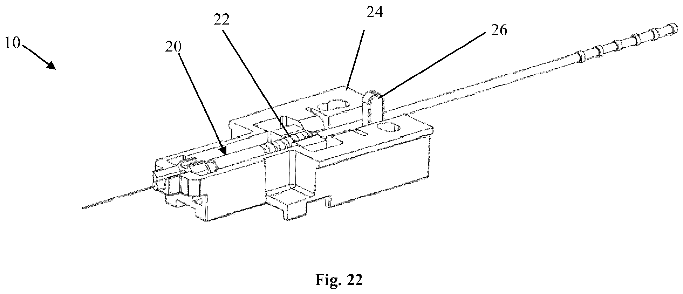

Fig.22 shows trimetric view of connector holder 310 with LC fusion splice connector ferrule assembly 320. The LC fusion splice connector ferrule assembly 320 features dust cap 126 with retaining feature 322. The connector holder 310 features base 324 and an ejector 326.

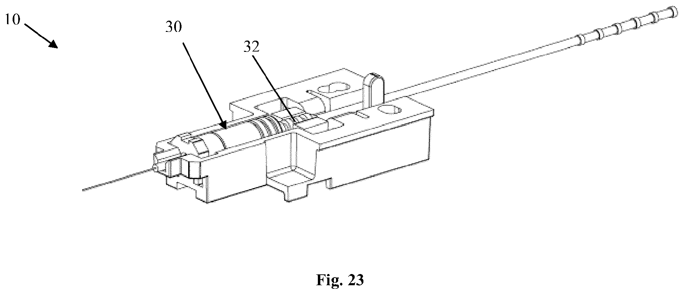

Fig. 23 shows trimetric view of connector holder 10 with SC fusion splice connector ferrule assembly 330. The SC fusion splice connector ferrule assembly 330 features dust cap 136 with reduced diameter retaining feature 332. Both LC and SC dust cap retaining features 322 and 332 are dimensionally the same size.

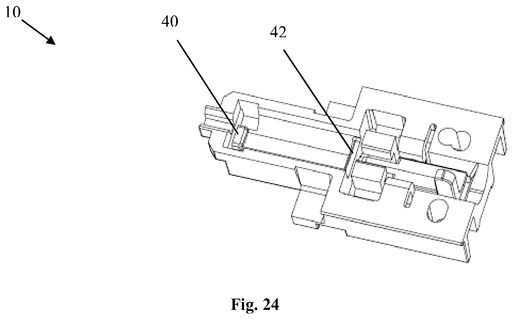

Fig. 24 is a trimetric view of connector holder 310 showing front support pad 340 and rear support rib 342. The ferrule holder of the fusion splice connector ferrule assembly rests on front support pad 340 so that no vertical force can be transferred into the 900-micron buffered fiber. Rear support rib 342 provides a second point of contact under the dust cap to support the fusion splice connector ferrule assembly vertically to aid in fiber alignment during fusion splicing.

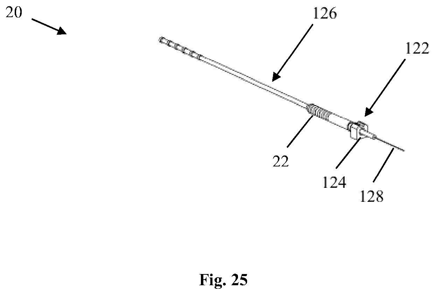

Fig. 25 is a trimetric view of LC fusion splice connector ferrule assembly 320. Ferrule holder 122 features flat bottom surface 124 that rests on front support pad 340 of connector holder 10. Dust cap 126 has retaining feature 322 that rests on rear support rib 342 of connector holder 310. The front and rear supports hold the ferrule assembly level and prevent bending of the fiber stub 128.

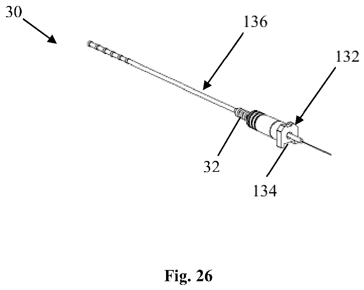

Fig. 26 is a trimetric view of SC fusion splice connector ferrule assembly 330. Ferrule holder 132 features notch 134 that rests on front support pad 340 of connector holder 310 such that the centerline of the fiber is at the same height as that of the LC assembly. Dust cap 136 has reduced diameter retaining feature 32 that rests on rear support rib 342 of connector holder 310.

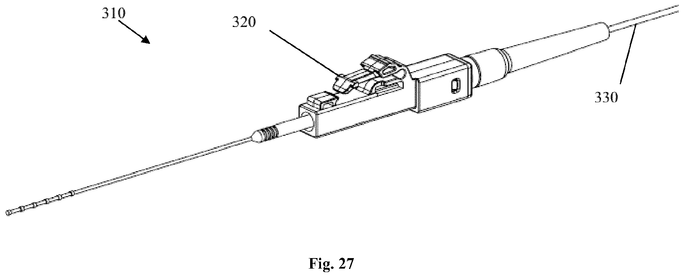

Fig.27 shows trimetric view of alternate fusion splice connector assembly 310. Fusion splice connector 320 is terminated to fiber optic cable 330. It features a main connector housing with a rigid rear opening that accepts a backbone with flexible side latches. This allows for side load to be applied to the connector via fiber tensile force without risk of the backbone becoming unlatched from the housing due to flexing.

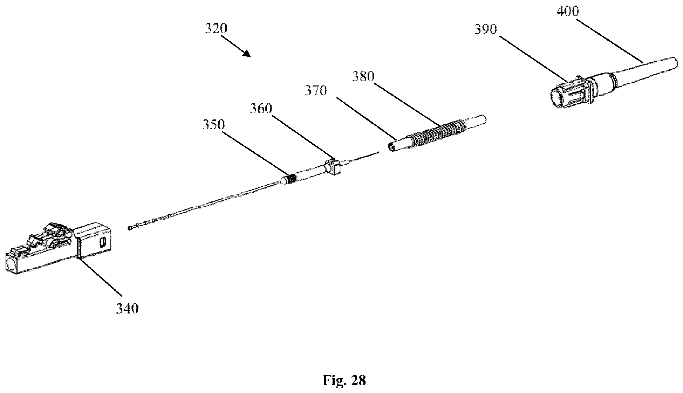

Fig. 28 is an exploded view of fusion splice connector 320. Fusion splice connector 320 includes housing 340, dust cap 350, ferrule assembly 360, protective sleeve 370, spring 380, backbone 390 and boot 400.

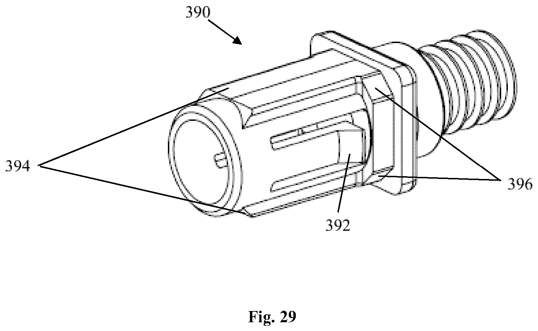

Fig. 29 is a trimetric view showing Backbone 390. Backbone 390 has flexible latches 392 that engage with latch windows on housing 340 to lock the backbone in place upon assembly. Top and bottom pads 394 and chamfered side extrusions 396 provide a snug fit of the backbone within the housing and prevent rotation of the backbone.

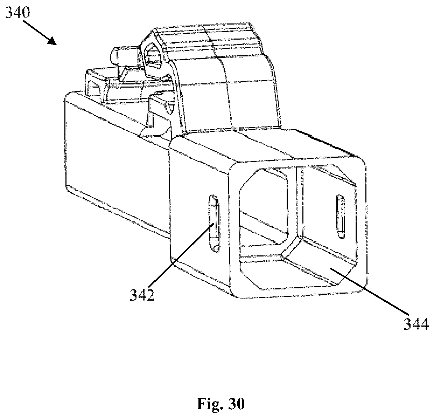

Fig. 30 is a rear trimetric view of housing 340 showing latch windows 342 that engage with flexible latches 392 of backbone 390. Rear internal profile 344 matches the shape of top and bottom pads 394 and chamfered side extrusions 396 of backbone 390 to radially locate the backbone within the housing.

While exemplary embodiments are described above, it is not intended that these embodiments describe all possible forms of the disclosure. Rather, the words used in the specification are words of description rather than limitation, and it is understood that various changes may be made without departing from the scope of the disclosure. Additionally, the features of various implementing embodiments may be combined to form further embodiments of the disclosure.

Examples of the present disclosure are set out in the following numbered clauses:
1. A system for connecting a fusion splice connector to an optical fiber comprising:
   a fiber optic fiber;
   a fusion splice connector wherein a cable-to-cable splice is fully enclosed within a connector housing; and
   a connector holder, the connector holder having a connector base with a front support pad configured to provide support to a first portion of the ferrule holder and a rear support rib configured to provide support to the ferrule holder at a point distal from the first portion.
2. The system of clause 1, wherein the connector holder includes an ejector arm.
3. The system of clause 2, wherein the ejector arm is rotatably connected to the connector holder base.
4. The system of clause 3, wherein as connector is loaded onto the fusion splice holder, a loading motion pushes the ejector arm down providing support to the connector.
5. The system of clause 4, wherein the connector includes a dust cap wherein the dust cap includes a feature that is sized to work with a holding feature on the connector holder.
6. The system of clause 5, wherein the ejector arm includes a push down tab that releases the connector with a downward push.
7. The system of clause 1, wherein the connector holder works with LC and SC fusion splice connectors.

## Claims

1. A system for connecting a fusion splice connector to an optical fiber comprising:
a fiber optic fiber;
a fusion splice connector wherein a cable-to-cable splice is fully enclosed within a connector housing; and
a connector holder, the connector holder having a connector base with a front support pad configured to provide support to a first portion of a ferrule holder and a rear support rib configured to provide support to the ferrule holder at a point distal from the first portion.

2. The system of claim 1, wherein the connector holder includes an ejector arm.

3. The system of claim 2, wherein the ejector arm is rotatably connected to the connector holder base.

4. The system of claim 2 or 3, wherein as the connector is loaded onto the fusion splice holder, a loading motion pushes the ejector arm down providing support to the connector.

5. The system of any preceding claim, wherein the connector includes a dust cap wherein the dust cap includes a feature that is sized to work with a holding feature on the connector holder.

6. The system of any of claims 2-4, wherein the ejector arm includes a push down tab that releases the connector with a downward push.

7. The system of any preceding claim, wherein the connector holder works with LC and SC fusion splice connectors..
